Europäisches Patentamt

European Patent Office

Office européen des brevets

(19)

(11) Numéro de publication : **0 022 590**
**B1**

(12)

# FASCICULE DE BREVET EUROPÉEN

(45) Date de publication du fascicule du brevet :
22.06.83

(51) Int. Cl.³ : **F 16 K 11/06**

(21) Numéro de dépôt : **80200612.2**

(22) Date de dépôt : **27.06.80**

(54) **Paire de plaques en matière dure pour un robinet mélangeur monocommande.**

(30) Priorité : **16.07.79 IT 4481079**

(43) Date de publication de la demande :
**21.01.81 Bulletin 81/03**

(45) Mention de la délivrance du brevet :
**22.06.83 Bulletin 83/25**

(84) Etats contractants désignés :
**AT BE CH DE FR GB LI NL SE**

(56) Documents cités :
**DE A 2 413 420**
**US A 3 674 048**

(73) Titulaire : **GEVIPI A.G. TRIESEN**
**Aeulestrasse 5 Postfach 83**
**FL-9490 Vaduz (LI)**

(72) Inventeur : **Uhlmann, Joachim**
**Neuköllnerstrasse 10**
**D-7250 Leonberg (DE)**

(74) Mandataire : **Patrito, Pier Franco, Dr. Ing.**
**Via Don Minzoni 14**
**I-10121 Torino (IT)**

EP 0 022 590 B1

Jouve, 18, rue St-Denis, 75001 Paris, France

## Paire de plaques en matière dure pour un robinet mélangeur monocommande

La présente invention concerne les plaques en matière dure qui sont installées dans les robinets mélangeurs pour contrôler les proportions de mélange et le débit, et plus particulièrement elle concerne une paire de plaques en matière dure pour un robinet mélangeur monocommande du type dans lequel une première plaque est destinée à être montée fixe dans le corps du robinet et la seconde plaque est destinée à être superposée de façon mobile à la première plaque en contact avec elle et à subir un déplacement angulaire autour d'un centre fixe de la première plaque, pour le réglage du rapport de mélange, et un déplacement linéaire le long d'un diamètre de la seconde plaque, mobile avec elle et passant par ledit centre fixe de la première plaque, pour le réglage du débit fourni, et dans lequel chaque plaque est pourvue de deux ouvertures de passage arquées, chaque ouverture de chaque plaque est destinée à coopérer avec une seule ouverture de l'autre plaque, et les deux ouvertures de chaque plaque sont situées de côtés opposés par rapport au centre de la respective plaque.

La fidélité de réglage du robinet, à savoir son aptitude à ne pas modifier la température de l'eau débitée, c'est-à-dire le rapport de mélange, par suite des modifications de réglage du débit, et vice-versa, dépend essentiellement de la conformation des ouvertures de passage creusées dans les plaques. Jusqu'à présent on a essayé d'améliorer le comportement des robinets du type mentionné, en corrigeant empiriquement le profil et la disposition de ces ouvertures, mais on n'a pas obtenu des résultats vraiment satisfaisants.

La présente invention a pour but d'établir une norme rationnelle pour déterminer le profil des ouvertures de passage pratiquées dans les plaques du type en question, afin de garantir l'obtention de la meilleure fidélité possible de réglage du robinet, sans affecter ni le maximum débit fourni, ni la marche silencieuse du robinet.

Pour atteindre cet objectif, selon l'invention, dans une paire de plaques du type mentionné dans le préambule, le bord intérieur de la première ouverture de la plaque fixe est défini substantiellement par un premier arc de cercle ayant son centre dans le centre fixe de la plaque fixe, le bord extérieur de la première ouverture de la plaque mobile est défini substantiellement par un second arc de cercle, de rayon égal au rayon dudit premier arc de cercle, ayant son centre dans le point dudit diamètre de la plaque mobile qui coïncide avec ledit centre fixe de la plaque fixe dans la position limite d'interception des deux plaques, le bord extérieur de la seconde ouverture de la plaque fixe est défini substantiellement par un troisième arc de cercle ayant son centre dans le centre fixe de la plaque fixe, et le bord intérieur de la seconde ouverture de la plaque mobile est défini substantiellement par un quatrième arc de cercle, de rayon substantiellement égal au rayon dudit troisième arc de cercle, ayant son centre dans le même point qui constitue le centre dudit second arc de cercle.

Grâce à cet ensemble de dispositions, dans n'importe quelle condition de réglage du robinet, les passages respectivement pour l'eau froide et pour l'eau chaude, définis par la coopération des correspondantes ouvertures des deux plaques, ont la forme de fentes arquées délimitées par des arcs de cercle de rayon égal, et présentent une largeur identique, dont la valeur dépend du réglage établi pour le débit fourni, tandis que le rapport entre les extensions en longueur des deux fentes arquées dépend du réglage établi pour le rapport de mélange. Dans ces conditions chaque réglage n'a aucun effet sur l'autre réglage, et cette indépendance est maintenue même dans les conditions de maximum étranglement et jusqu'à l'interception totale du flux.

En outre, de préférence, le bord extérieur de la première ouverture et le bord intérieur de la seconde ouverture de la plaque fixe sont définis substantiellement par des arcs de cercle ayant leur centre dans le centre fixe de la plaque fixe, les largeurs radiales desdites première et seconde ouvertures de la plaque fixe sont égale l'une à l'autre, le bord intérieur de la première ouverture et le bord extérieur de la seconde ouverture de la plaque mobile sont définis substantiellement par des arcs de cercle ayant leur centre dans le point dudit diamètre de la plaque mobile qui est éloigné du centre desdits second et quatrième arc de cercle, vers la seconde ouverture de la plaque mobile, en mesure substantiellement égale à la largeur radiale des ouvertures de la plaque fixe, et les largeurs radiales desdites première et seconde ouverture de la plaque mobile, mesurées en correspondance dudit diamètre, sont égales l'une à l'autre et à la largeur radiale des ouvertures de la plaque fixe.

Cet ensemble de dispositions complémentaires, ajouté aux dispositions fondamentales indiquées auparavant, permet de réaliser les plaques avec des ouvertures ayant l'extension minimale fonctionnellement utile et de forme harmonique, facilement réalisable et telle qu'elle ne puisse affaiblir les plaques d'une façon non nécessaire.

Les caractéristiques indiquées et autres de la présente invention seront plus clairement comprises par la suivante description détaillée d'une forme de réalisation, indiquée à titre d'exemple non limitatif, d'une paire de plaques en matière dure pour un robinet mélangeur monocommande, selon l'invention, représentées schématiquement aux dessins annexés, dans lesquels :

Figure 1 montre seulement la plaque fixe de la paire de plaques, vue de sa face destinée à recevoir le contact de la plaque mobile ;

Figure 2 montre d'une façon similaire seulement la plaque mobile, vue du côté opposé à sa face destinée à entrer en contact avec la plaque fixe ;

Figure 3 montre l'ensemble des deux plaques suivant les figures 1 et 2, superposées l'une à l'autre, dans une position intermédiaire de réglage.

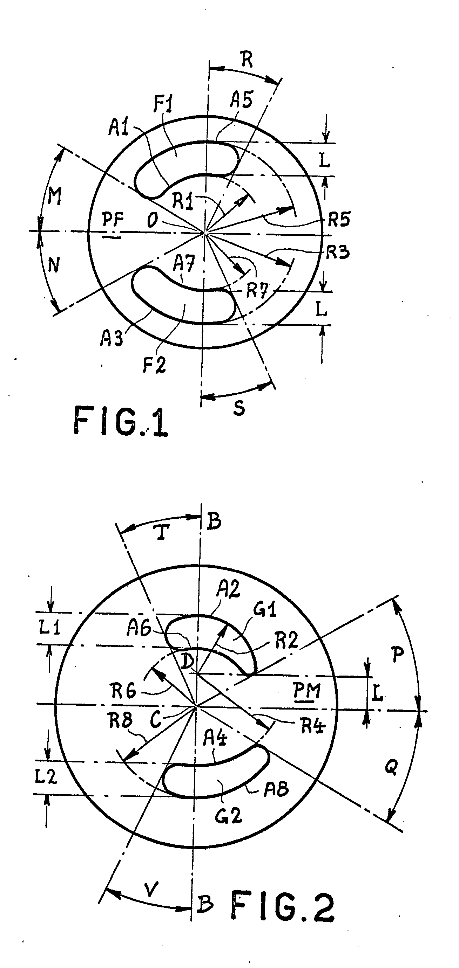

Avec référence à la plaque fixe PF représentée sur la figure 1, on observe que dans la forme de réalisation représentée, le côté intérieur A1 et le côté extérieur A5 de la première ouverture F1 de la plaque fixe PF sont définis par des arcs de cercle centrés tous les deux dans un point O, qui dans ce cas est aussi le centre géométrique de la plaque PF, et qui, quand la plaque est installée dans le robinet, est destiné à coïncider avec la trace de l'axe de rotation des moyens de commande du robinet. Lesdits arcs de cercle ont un rayon R1 et respectivement R5, et par conséquent la largeur radiale constante de la première ouverture F1 est L1 = R5 − R1.

D'une manière analogue, le côté extérieur A3 et le côté intérieur A7 de la seconde ouverture F2 de la plaque fixe PF sont définis par des arcs de cercle centrés dans le point O et ayant le rayon R3 et respectivement R7, de sorte que la largeur radiale constante de la seconde ouverture F2 est L2 = R3 − R7.

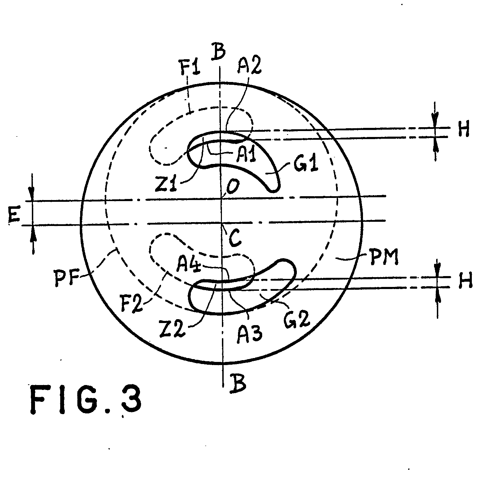

Avec référence à la plaque mobile PM représentée sur la figure 2, on observe que dans la forme de réalisation représentée le côté extérieur A2 de la première ouverture G1 et le côté intérieur A4 de la seconde ouverture G2 de la plaque mobile PM sont définis par des arcs de cercle centrés, tous les deux, dans un point D, et ayant les rayons R2 et respectivement R4, tels qu'ils correspondent à la condition désirée par l'invention : R1 = R2 ; R3 = R4. Le point D se trouve sur un diamètre B-B de la plaque mobile PM, lequel, quand la plaque est installée dans le robinet, est destiné à être orienté suivant la direction de déplacement linéaire des moyens de commande du robinet et à passer, en outre, par le centre fixe O de la plaque fixe PF avec laquelle la plaque mobile PM est en contact.

De plus, dans ce cas, le côté intérieur A6 de la première ouverture G1 et le côté extérieur A8 de la seconde ouverture G2 de la plaque mobile PM sont définis par des arcs de cercle centrés, tous les deux, dans un point C qui dans ce cas est aussi le centre géométrique de la plaque PM, et ayant un rayon R6 et respectivement R8. Le centre C, qui se trouve, lui-aussi, sur le diamètre B-B, est éloigné du centre D des arcs A2 et A4 d'une longueur L, et par conséquent les largeurs des ouvertures G1 et G2, mesurées en correspondance du diamètre B-B, sont respectivement L1 = R2 − R6 + L et L2 = R8 − R4 + L.

Suivant le proportionnement préféré, proposé par la présente invention, on a : L = L1 = L2 ; R1 = R2 = R6 = R7 ; R3 = R4 = R5 = R8 = R1 + L.

Les côtés ou bords extérieur et intérieur de chaque ouverture de chaque plaque sont raccordés entre eux par des parties de raccordement qui, dans l'exemple représenté, sont des arcs de cercle de petit rayon, mais qui pourraient aussi bien avoir un autre profil, étant donné qu'il n'influencent pas les résultats de l'application de l'invention.

Quand les plaques PM et PF sont superposées l'une à l'autre et concentriques (points C et O coïncidents), la largeur, définie auparavant, des ouvertures respectives correspondent l'une à l'autre ; on a donc le maximum débit, tandis qu'une rotation de la plaque mobile PM autour de son centre C fait varier les proportions de mélange en permettant de débiter eau froide seulement, eau chaude seulement, ou un mélange d'eau froide et eau chaude proportionné à volonté.

Au contraire, quand, en déplaçant linéairement la plaque mobile PM le long de son diamètre B-B, on réalise une excentricité E (figure 3) entre les centres O et C des deux plaques, on obtient un étranglement du flux et un débit réduit. Comme on peut noter de la figure 3, dans ces conditions on obtient, pour l'eau froide et pour l'eau chaude, deux fentes de passage : Z1, délimitée par les arcs A1 et A2, et Z2, délimitée par les arcs A3 et A4. Étant données les conditions posées par l'invention, ces fentes de passage résultent délimitées par des arcs ayant le même rayon et ont une largeur constante H = L − E, qui est égale pour les deux fentes Z1 et Z2, et ces conditions se maintiennent dans chaque condition de réglage, la fermeture ayant lieu simultanément pour les deux fentes et en même temps sur toute leur longueur quand le déplacement linéaire de la plaque mobile PM fait coïncider son point D avec le centre O de la plaque fixe PF. Il en résulte la totale indépendance des deux réglages, du débit fourni et de la proportion de mélange.

En ce qui concerne l'extension en longueur des ouvertures F1, F2, G1, G2, on fait remarquer que les ouvertures F1 et F2 s'étendent jusqu'à une distance angulaire M, respectivement N, d'un diamètre de la plaque PF qui ne le coupe pas, et jusqu'à une distance angulaire respectivement R et S au-delà d'un diamètre perpendiculaire au diamètre considéré avant ; tandis que les ouvertures G1 et G2 s'étendent jusqu'à une distance angulaire respectivement T, V au-delà du diamètre B-B de la plaque mobile PM, et jusqu'à une distance angulaire respectivement P et Q d'un diamètre perpendiculaire au diamètre B-B. Suivant un proportionnement préféré (mais non nécessaire) de l'invention, les égalités suivantes sont respectées également : M = P ; N = Q ; R = T ; S = V, et préférablement aussi : M = N = P = Q ; R = S = T = V, en réalisant dans ce cas une forme de réalisation ayant une appréciable symétrie, avantageuse pour le projet et la construction des plaques.

Dans la présente description on a discuté seulement des ouvertures de passage pour l'eau chaude et pour l'eau froide ; en effet, ces ouvertures sont les seules existantes s'il n'est pas prévu un retour du flux mélangé à travers les plaques, mais naturellement, si, au contraire, un tel retour est prévu, les plaques seront pourvues aussi d'ouvertures pour le passage de ce flux d'eau mélangée, lesquelles, d'ailleurs, peuvent être disposées d'une des façons connues et ne sont pas affectées par l'application de l'invention.

**Revendications**

1. Paire de plaques en matière dure pour un robinet mélangeur monocommande du type dans lequel une première plaque (PF) est destinée à être installée fixe dans le corps du robinet et la seconde plaque (PM) est destinée à être superposée de façon mobile à la première plaque (PF) en contact avec elle et à subir un déplacement angulaire autour d'un centre fixe (O) de la première plaque, pour le réglage du rapport de mélange, et un déplacement linéaire le long d'un diamètre (B-B) de la seconde plaque, mobile avec elle et passant par ledit centre fixe (O) de la première plaque, pour le réglage du débit fourni, et dans lequel chaque plaque est pourvue de deux ouvertures de passage arquées (F1, F2 ; G1, G2), chaque ouverture de chaque plaque est destinée à coopérer avec une seule ouverture de l'autre plaque, et les deux ouvertures de chaque plaque sont situées de côtés opposés par rapport au centre (O, C) de la respective plaque, caractérisée en ce que le bord intérieur (A1) de la première ouverture (F1) de la plaque fixe (PF) est défini substantiellement par un premier arc de cercle ayant son centre dans le centre fixe (O) de la plaque fixe, le bord extérieur (A2) de la première ouverture (G1) de la plaque mobile (PM) est défini substantiellement par un second arc de cercle, de rayon (R2) substantiellement égal au rayon (R1) dudit premier arc de cercle (A1), ayant son centre (D) dans le point dudit diamètre (B-B) de la plaque mobile (PM) qui coïncide avec ledit centre fixe (O) de la plaque fixe dans la position limite d'interception des deux plaques, le bord extérieur (A3) de la seconde ouverture (F2) de la plaque fixe (PF) est défini substantiellement par un troisième arc de cercle ayant son centre dans le centre fixe (O) de la plaque fixe, et le bord intérieur (A4) de la seconde ouverture (G2) de la plaque mobile (PM) est défini substantiellement par un quatrième arc de cercle, de rayon (R4) substantiellement égal au rayon (R3) dudit troisième arc de cercle (A3), ayant son centre dans le même point (D) qui constitue le centre dudit second arc de cercle (A2).

2. Paire de plaques selon la revendication 1, caractérisée en ce que le bord extérieur (A5) de la première ouverture (F1) et le bord intérieur (A7) de la seconde ouverture (F2) de la plaque fixe (PF) sont définis substantiellement par des arcs de cercle ayant leur centre dans le centre fixe (O) de la plaque fixe (PF), et les largeurs radiales desdites première et seconde ouvertures de la plaque fixe sont égales l'une à l'autre ; et en ce que le bord intérieur (A6) de la première ouverture (G1) et le bord extérieur (A8) de la seconde ouverture (G2) de la plaque mobile (PM) sont définis substantiellement par des arcs de cercle ayant leur centre dans le point (C) dudit diamètre (B-B) de la plaque mobile (PM) qui est éloigné du centre (D) desdits second et quatrième arc de cercle, vers la seconde ouverture (G2) de la plaque mobile, d'une mesure substantiellement égale à la largeur radiale des ouvertures de la plaque fixe, et les largeurs radiales desdites première et seconde ouverture de la plaque mobile, mesurées en correspondance dudit diamètre (B-B), sont égales l'une à l'autre et à la largeur radiale des ouvertures de la plaque fixe.

3. Paire de plaques selon la revendication 1, caractérisée en ce que les ouvertures (G1, G2) de la plaque mobile (PM) s'étendent, d'un côté, au-delà dudit diamètre (B-B), d'angles (T, V) respectivement égaux aux angles (R, S) desquels les ouvertures (F1, F2) de la plaque fixe (PF) s'étendent, du côté opposé, au-delà d'un diamètre qui les coupe ; et en ce que les ouvertures (G1, G2) de la plaque mobile (PM) s'étendent vers le diamètre perpendiculaire audit diamètre (B-B) jusqu'à des distances angulaires (P, Q) respectivement égales aux distances angulaires (M, N) par rapport au diamètre perpendiculaire audit diamètre qui les coupe, jusqu'auxquelles s'étendent les ouvertures (F1, F2) de la plaque fixe (PF).

4. Paire de plaques selon la revendication 3, caractérisée en ce que lesdites distances angulaires correspondantes (M, N ; P, Q ; R, S ; T, V) sont égales pour les deux ouvertures (F1, F2 ; G1, G2) de chaque plaque (PF, PM).

**Claims**

1. A pair of hard material plaques for a single control mixer valve of the type in which a first plaque (PF) is intended to be mounted in a fixed manner within the body of the valve and the second plaque (PM) is intended to be superimposed in a movable manner onto and in contact with the first plaque (PF) and to undergo an angular displacement about a fixed center (O) of the first plaque, for the adjustment of the mixing ratio, and a linear displacement along a diameter (B-B) of the second plaque, movable therewith and passing through said fixed center (O) of the first plaque, for the adjustment of the delivery rate, and in which each plaque is provided with two arcuate passage windows (F1, F2 ; G1, G2), each window of each plaque is intended to cooperate with only one window of the other plaque, and this two windows of each plaque are situated on opposite sides relative to the center (O, C) of the respective plaque, characterized in that the inner edge (A1) of the first window (F1) of the fixed plaque (PF) is substantially defined by a first circular arc having its center in the fixed center (O) of the fixed plaque, the outer edge (A2) of the first window (G1) of the movable plaque (PM) is substantially defined by a second circular arc with a radius (R2) substantially equal to the radius (R1) of the said first circular arc (A1), having its center (D) in that point of said diameter (B-B) of the movable plaque (PM) which in the limit interception position of the two plaques coincides with said fixed center (O) of the fixed plaque, the outer edge (A3) of the second window (F2) of the fixed plaque (PF) is substantially defined by a third circular arc having its center in the fixed center (O) of the fixed plaque, and the inner edge (A4) of the second window (G2) of the movable plaque (PM) is substantially defined by a fourth circular arc with a radius (R4) substantially equal to the radius (R3) of said third circular arc (A3), having its center in the same point (D) being the center of said second circular arc (A2).

2. A pair of plaques as claimed in Claim 1, characterized in that the outer edge (A5) of the first window (F1) and the inner edge (A7) of the second window (F2) of the fixed plaque (PF) are substantially defined by circular arcs having their center in the fixed center (O) of the fixed plaque (PF), and the radial widths of said first and second windows of the fixed plaque are equal to one another ; and in that the inner edge (A6) of the first window (G1) and the outer edge (A8) of the second window (G2) of the movable plaque (PM) are substantially defined by circular arcs having their center in that point (C) of said diameter (B-B) of the movable plaque (PM), whose distance from the center (D) of said second and fourth circular arcs, towards the second window (G2) of the movable plaque, is substantially equal to the radial width of the windows of the fixed plaque, and the radial widths of said first and second windows of the movable plaque, measured at the said diameter (B-B), are equal to one another and to the radial width of the windows of the fixed plaque.

3. A pair of plaques as claimed in Claim 1, characterized in that the windows (G1, G2) of the movable plaque (PM) extend, on one side, beyond said diameter (B-B) by angles (T, V) which are equal, respectively, to the angles (R, S) by which the windows (F1, F2) of the fixed plaque (PF) extend, on the opposite side, beyond a diameter which intersects them ; and in that the windows (G1, G2) of the movable plaque (PM) extend towards the diameter perpendicular to said diameter (B-B) up to angular distances (P, Q) which are, respectively, equal to the angular distances (M, N) relative to the diameter perpendicular to the said diameter which intersects them, up to which the windows (F1, F2) of the fixed plaque (PF) extend.

4. A pair of plaques as claimed in Claim 3, characterized in that said corresponding angular distances (M, N ; P, Q ; R, S ; T, V) are equal for both windows (F1, F2 ; G1, G2) of each plaque (PF, PM).

**Ansprüche**

1. Plättchenpaar aus hartem Material für eine Einhebel-Mischarmatur der Art, bei der ein erstes Plättchen (PF). zum ortsfesten Einbau in den Körper der Armatur bestimmt ist und das zweite Plättchen (PM) zur beweglichen Überlappung des ersten Plättchens (PF) in Berührung mit demselben, und eine Winkelverschiebung um einen ortsfesten Mittelpunkt (O) des ersten Plättchens, zwecks Regelung des Mischverhältnisses, und eine Linearverschiebung längs eines mit ihm beweglichen und durch den genannten Mittelpunkt (O) des ersten Plättchens hindurchgehenden Durchmessers (B-B) des zweiten Plättchens, zwecks Regelung der Ausflussmenge, zu erfahren, bestimmt ist, und bei der jedes Plättchen mit zwei bogenförmigen Durchgangsöffnungen (F1, F2 ; G1, G2) versehen ist, jede Öffnung eines jeden Plättchens zum Zusammenarbeiten mit nur einer Öffnung des anderen Plättchens bestimmt ist, und die beiden Öffnungen eines jeden Plättchens auf den gegenüber dem Mittelpunkt (O, C) des entsprechenden Plättchens gegenüberliegenden Seiten angeordnet sind, dadurch gekennzeichnet, dass der innere Rand (A1) der ersten Öffnung (F1) des ortsfesten Plättchens (PF) im wesentlichen durch einen ersten Kreisbogen definiert ist, der seinen Mittelpunkt im ortsfesten Mittelpunkt (O) des ortsfesten Plättchens hat, der äussere Rand (A2) der ersten Öffnung (G1) des beweglichen Plättchens (PM) im wesentlichen durch einen zweiten, einen dem Radius (R1) des genannten ersten Kreisbogens (A1) im wesentlichen gleichen Radius (R2) aufweisenden Kreisbogen definiert ist, der seinen Mittelpunkt (D) in demjenigen Punkt des Durchmessers (B-B) des beweglichen Plättchens (PM) hat, der in der Grenz-Absperrstellung der beiden Plättchen mit dem genannten ortsfesten Mittelpunkt (O) des ortsfesten Plättchens zusammenfällt, der äussere Rand (A3) der zweiten Öffnung (F2) des ortsfesten Plättchens (PF) im wesentlichen durch einen dritten Kreisbogen definiert ist, der seinen Mittelpunkt im ortsfesten Mittelpunkt (O) des ortsfesten Plättchens hat, und der innere Rand (A4) der zweiten Öffnung (G2) des beweglichen Plättchens (PM) im wesentlichen durch einen vierten, einen dem Radius (R3) des dritten Kreisbogens (A3) im wesentlichen gleichen Radius (R4) aufweisenden Kreisbogen definiert ist, der seinen Mittelpunkt in demselben Punkt (D) hat, der den Mittelpunkt des zweiten Kreisbogens (A2) bildet.

2. Plättchenpaar nach Anspruch 1, dadurch gekennzeichnet, dass der äussere Rand (A5) der ersten Öffnung (F1) und der innere Rand (A7) der zweiten Öffnung (F2) des ortsfesten Plättchens (PF) im wesentlichen durch Kreisbögen definiert sind, die ihren Mittelpunkt im ortsfesten Mittelpunkt (O) des ortsfesten Plättchens (PF) haben, und die radiale Breiten der ersten und der zweiten Öffnungen des ortsfesten Plättchens gleich sind ; und dass der innere Rand (A6) der ersten Öffnung (G1) und der äussere Rand (A8) der zweiten Öffnung (G2) des beweglichen Plättchens (PM) im wesentlichen durch Kreisbögen definiert sind, die ihren Mittelpunkt in dem Punkt (C) des Durchmessers (B-B) des beweglichen Plättchens (PM) haben, der von dem Mittelpunkt (D) des zweiten und vierten Kreisbogens, nach der zweiten Öffnung (G2) des beweglichen Plättchens hin, um einen der radialen Breite der Öffnungen des ortsfesten Plättchens im wesentlichen gleichen Abstand entfernt ist, und die radialen Breiten der genannten zweiten und vierten Öffnungen des beweglichen Plättchens, am genannten Durchmesser (B-B) gemessen, einander und der radialen Breite der Öffnungen des ortsfesten Plättchens gleich sind.

3. Plättchenpaar nach Anspruch 1, dadurch gekennzeichnet, dass die Öffnungen (G1, G2) des beweglichen Plättchens (PM) sich über den genannten Durchmesser (B-B) um Winkel (T bzw. V) auf der einen Seite erstrecken, die den Winkeln (R bzw. S) gleich sind, um die sich, auf der gegenüberliegenden Seite, die Öffnungen (F1, F2) über einen sie schneidenden Durchmesser erstrecken ; und dass sich die Öffnungen (G1, G2) des beweglichen Plättchens (PM), in Richtung auf den zum Durchmesser (B-B) senkrechten Durchmesser bis auf Winkelabständen (P bzw. Q) erstrecken, die den Winkelabständen (M bzw. N) gegenüber dem zum sie schneidenden Durchmesser senkrechten Durchmesser gleich sind, bis auf die sich die Öffnungen (F1, F2) des ortsfesten Plättchens (PF) erstrecken.

4. Plättchenpaar nach Anspruch 3, dadurch gekennzeichnet, dass die entsprechenden Winkelabstände (M, N ; P, Q ; R, S ; T, V) für beide Öffnungen (F1, F2 ; G1, G2) eines jeden Plättchens (PF, PM) gleich sind.

FIG.1

FIG.2

FIG.3